# EUROPEAN PATENT APPLICATION

(11) **EP 4 498 722 A1**
(43) Date of publication of application: **29.01.2025**
(21) Application number: 24190804.5
(22) Date of filing: 25.07.2024
(51) Int. Cl.: H04W 12/50, H04W 12/03, H04W 12/106, H04W 76/19, H04W 76/15, H04W 84/12

(54) **SYSTEMS FOR AND METHODS OF REASSOCIATION IN A NETWORK**

(30) Priority: 28.07.2023 US 202318361610
(71) Applicant: Avago Technologies International Sales Pte. Limited, Singapore 768923 (SG)
(72) Inventor: Buhari, Nizamudeen Mohamed, Irvine 92618 (US); Tadahal, Shivkumar Basavaraj, Irvine 92618 (US); Kulkarni, Karthik Desh, Irvine 92618 (US); Kamath, Manoj Raveendranath, Irvine 92618 (US); Gupta, Raghvendra, Irvine 92618 (US); Ramanna, Kumar, Irvine 92618 (US)
(74) Representative: Dilg, Haeusler, Schindelmann Patentanwaltsgesellschaft mbH

(57) **Abstract**

Systems and methods use a protocol for a secure reassociation exchange. A first device (220) can be used in the exchange and includes a circuit configured to provide at least one frame (313) to a second device (208, 212). The frame (313) includes comprises a protected reassociation request message. Alternatively, frame (313) can include a protected reassociation response message.

## Description

### Field of the Disclosure

This disclosure generally relates to systems for and methods of communication between an access point (AP) and a client device (e.g., a station (STA)) or between other communication devices. In some embodiments, this disclosure generally relates to systems and methods related to a reassociation operation and/or messages therefor including but not limited to messages used in a secure or protected reassociation protocol.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), code division multiple access (CDMA), etc. As higher data throughput and other changes develop, newer standards are constantly being developed for adoption, such as a progression from IEEE 802.11n to IEEE 802.11ac.

Establishing a connection for communication between an access point (AP) and a client device (e.g., a station (STA)) or between other communication devices can involve an exchange of a number of messages. A connection can be reestablished after it has been terminated. The protocols for reestablishing a connection can contribute to communication overhead and can provide an opportunity for a security breach.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points (APs) in communication with one or more devices or stations (STAs), according to some embodiments.
FIGS. 1B and 1C are block diagrams depicting computing devices useful in connection with the methods and systems described herein, according to some embodiments.
FIG. 2A is a block diagram depicting a network including APs and STAs according to some embodiments.
FIG. 2B is a more detailed block diagram of an AP or STA of the network illustrated in FIG. 2A configured for a reassociation operation according to some embodiments.
FIG. 3 is a flow diagram depicting a reassociation operation involving an AP or STA illustrated in FIG. 2B according to some embodiments.
FIG. 4 is a general block diagram depicting a reassociation response message for an AP or STA illustrated in FIG. 2B according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE 802.11be^{™}, IEEE P802.11n^{™}; IEEE P802.11ax^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of protocols for data request/response operations and methods and devices using such protocols.

Some embodiments disclosed herein are related to a protocol for secure reassociation exchanges between a previously connected client and AP. In some embodiments, a protocol is provided for a WiFi network (e.g., IEEE 802.11 network, etc.), a cellular network, point to point communications, or combinations thereof. The protocol can be a used with a Wi-Fi AP to enhance connection security and reduce time to reestablish a connection in some embodiments. In some embodiments, a device that supports protected management frames and beacon protection capability utilizes the protocol. In some embodiments, systems and methods provide protected management frames for reassociation (e.g., protected or secure reassociation request and/or response frames). In some embodiments, a WiFi network may refer to wireless network that has Internet access. In some embodiments, a cellular network may refer to a radio network distributed over land through cells, where each cell includes a transceiver (e.g., a node or base station).

In some embodiments, systems and methods reestablish the connection between an AP and STA in a secure fashion using the protocol, thereby reducing the connection time. In some embodiments, a protected reassociation request/response frame can be used for a client attempt for reassociation for any purpose (e.g., to update its configuration, after roaming, after going out of range, after a WiFi Off/On cycle, a reboot, a restart, or other event). In some embodiments, the systems and methods reduce the time required to onboard a homecoming client to the existing connected AP. The time to onboard can be related to temporary rejections while a secure association (SA) query verification is completed to differentiate a genuine reassociation attempt from any kind of denial of service (DoS) attacks from intruder devices emulating the client's media access control (MAC) address. The time to onboard can also be related to a time for the AP to terminate the existing client connection (which causes a tear down of the upper network layer connections) before accepting the new re-association request as a fresh connection. The time to onboard can also includes a 4-way handshake procedure to complete the secure connection.

Changing or updating a non-AP STA configuration can require a reassociation and includes but is not limited to the following cases: changing or modifying an operating capability such as, modulation and coding scheme (MCS), a number of spatial streams (NSS), a bandwidth (BW), etc.; adding or deleting of link(s) (e.g., in case of 802.1 The multilink operation); and changing or modifying derived keys (pairwise transient key (PTK), etc.) for a connection of the STA or AP via an out of band (OOB ) mechanism. In some embodiments, the systems and methods allow for a temporary change of configuration without requiring a fresh connection and tear down.

In some embodiments, the systems and methods are used in an IEEE 802.11 infrastructure network, but use a reassociation request and response frame exchange protected under a protected management frame (PMF) category (e.g., a secured reassociation or reconfiguration exchange (SRX)). In some embodiments, the systems and methods use association/reassociation request frames and association/reassociation response frames when the AP and client sides have valid keys for the connection (without a teardown and fresh connection).

A connection may refer to communication instituted between nodes (such as a wireless communication between nodes) for exchanging data according to a protocol in some embodiments. In some embodiments, a connection is established using a three-way or four-way handshake mechanism (via discovery, authentication, and association operations) in some embodiments. A secure connection may refer to a connection that provides data in a format that cannot easily be obtained by another party in some embodiments. Various methods can establish a secure connection including but not limited to a data encryption method. In some embodiments, data encryption employs algorithms that encrypt and decrypt the information, including but not limited to: WPA and WPA2 operations under the 802.11 standard (e.g., temporal key integrity protocol (TKIP) and advanced encryption standard (AES). The connection can be a wireless connections to or from a client device (e.g., a STA) and AP or can be between other types of communication devices. The wireless network can be an 802.11 WiFi network (e.g., IEEE 802.11be) in some embodiments. The client device or AP can be implemented in a device including one or more integrated circuits (ICs) packaged in an IC package.

An authentication operation may refer to a procedure for how a client device gains access to the network. Authentication provides proof of identity to ensure the client device or user is allowed access to the network. An association operation may refer to a procedure for a client device or user that has been authenticated to become associated with an AP. Association allows the network to determine where to send data that is intended for a client device (e.g., data is sent through the AP with which the client device is associated). Generally, a client device is only associated with a single AP. A disassociation may refer to procedure where a client device is no longer associated with an AP in some embodiments. Disassociation prevents the AP from continuing to attempt to transmit data to the client device after the connection is cancelled in some embodiments. Disassociation generally involves the sending of a disassociation frame or message from the AP to the client device or from the client device to the AP in some embodiments. A client device can be disassociated from an AP while still maintaining authentication on the network. A deauthentication may refer to a procedure that disallows any further service to be provided to a client device in some embodiments. Deauthentication generally involves the sending of a deauthentication frame or message from the AP to the client device or from the client device to the AP in some embodiments.

Some embodiments relate to a first device. The first device includes a circuit configured to provide at least one frame to a second device. The frame includes comprises a protected reassociation request message.

In some embodiments, the frame is provided according to an 802.11 protocol and a connection is reestablished by using a reassociation operation. In some embodiments, the first device is a beacon protection enabled station (STA). In some embodiments, the circuit is configured to receive a protected reassociation response message from the second device. In some embodiments, the second device is a beacon protection supported access point.

In some embodiments, the circuit is configured to receive a protected reassociation response message from the second device and to provide an acknowledgement message in response to the protected reassociation response message. In some embodiments, the circuit is configured to provide the message with information for links for a multilink operation. In some embodiments, the information is for a reduced number of the links. In some embodiments, the information is related to traffic identification to link mapping.

A protected reassociation request message may refer to a message (e.g., a management frame) that requests a reassociation and is encrypted or otherwise secured in some embodiments. The protected reassociation request message may request a response be sent including information about the capabilities of one or more service set identifications in a network and be provided using key information provided during the four way handshake associated with a connection in some embodiments. A protected reassociation response message may refer to a message (e.g., a management frame) that responds a reassociation request and is encrypted or otherwise secured in some embodiments. The protected reassociation response message is similar to the protected reassociation request message and can include capability information, authentication information, etc. as well as acknowledgement of the reassociation in some embodiments. A reassociation operationmay refer to any operation where a connection between two devices is reestablished after an event in some embodiments. The event may refer to a reboot or refresh of a wifi interface, a failed roaming attempt, a capability/parameter reconfiguration, a multilink configuration change, or a circumstance where a connection requires connection reestablishment in some embodiments. Links may refer to communication channels or bands used to communicate between two devices in some embodiments. Access points and STAs have the capabilities to transmit and receive data from the same traffic flow over multiple radio interfaces or multiple links in some embodiments. Multilink operations may refer to any communication that uses more than one link in some embodiments. An acknowledgement message may refer to any message that provides an indication that data has been received and/or approved in some embodiments. Traffic identification to link mapping may refer to providing data that correlates traffic identification or addresses with the corresponding link in some embodiments.

Some embodiments relate to a first device. The first device includes a circuit configured to provide at least one frame to a second device in response to a protected reassociation request message. The frame includes a protected reassociation response message.

In some embodiments, the frame is provided according to an 802.11 protocol and the connection is established by using an association or authentication operation. The first device is a beacon protection enabled access point. In some embodiments, the frame comprises information that confirms reassociation of the connection between the first device and the second device. In some embodiments, the circuit is configured to provide the frame if the second device is on a list of associated devices stored on the second device. In some embodiments, the circuit is configured to not provide the frame if the second device is not on a list of associated devices stored on the second device. An associated device refers to a device that has been and/or remains associated with another device according to an association operation within a period of time in some embodiments.

Some embodiments relate to a method of operating a first device. The first device has a connection with a second device, and the connection has associated key information. The method includes providing a protected reassociation request message using the key information across the connection from the first device to the second device after an event that affects the connection. The method also includes receiving a protected reassociation response message from the second device at the first device using the key information. Key information can refer to any data used to provide a protected communications in some embodiments. The key information can be a wired equivalent privacy (WEP) keys used for encrypting frames (e.g., in a 802.11 network).

In some embodiments, the protected reassociation request message is a protected management frame. In some embodiments, the event comprises a failed roaming attempt, a capability/parameter reconfiguration, or a multilink configuration change. In some embodiments, the protected reassociation response message from the second device is provided if the first device on a list of associated devices stored on the second device. In some embodiments, the event is a change in a multilink configuration. In some embodiments, the event comprises roaming from the second device. A change in a multilink configuration may refer to a change in a parameter used for a multilink communication operation in some embodiments.

A frame may refer to a digital data transmission unit in some embodiments. For example, a frame may refer to a container for a single network packet. A data frame may refer to a frame that contains data in some embodiments. An encrypted frame may refer to a frame that has been encrypted in some embodiments. A broadcast message or broadcast frame may refer to a message or frame that is sent to more than one device in the BSS connected to or communicating with the AP in some embodiments. In some embodiments, the broadcast message or broadcast frame is sent to all the devices in the BSS connected to the AP. A unicast message or unicast frame may refer to a message or frame that has a single destination in some embodiments. A management frame may refer to a frame for control or management operations including but not limited to beacon frames, probe request/response frames, authentication request/response frames, association request/response frames, deauthentication frames, disassociation frames, reassociation request frames, reassociations response frames, etc. A protected management frame may refer to a management frame configured to provide protection for a unicast and multicast management action in some embodiments. The frame can be protected from both eavesdropping and forging and can have privacy protections with mechanisms to improve the resiliency. Management frame protection (MFP) is a wireless feature that increases the security of the management frame. The frame can be provided according to wireless standard is IEEE 802.11w-2009 which aims to provide data confidentiality of the management frames and protect wireless connectivity. The management frame protection features of STAS and APs can provide set of information elements for the frames that increases or ensures security in some embodiments.

### A. Computing and Network Environment

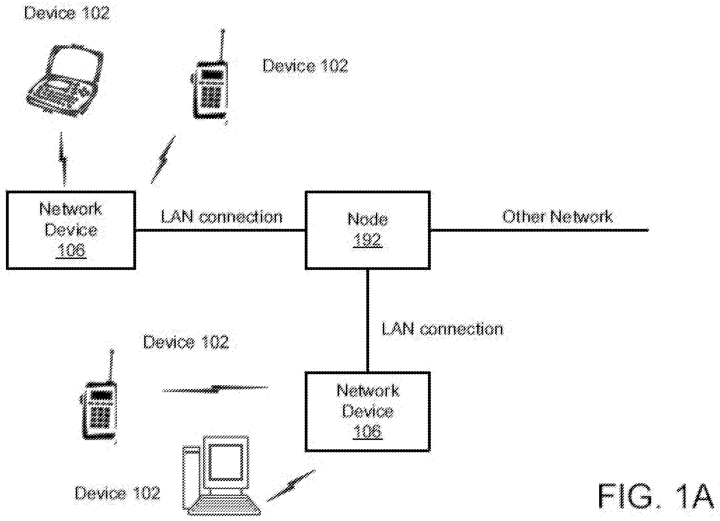

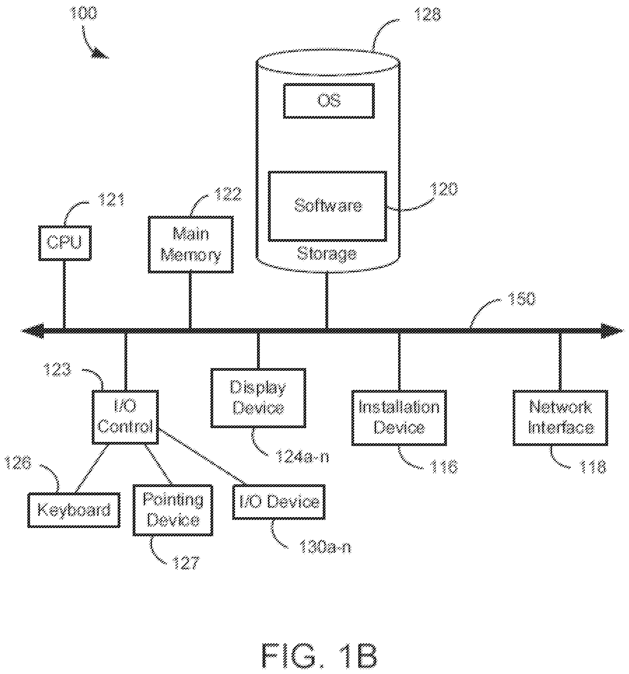

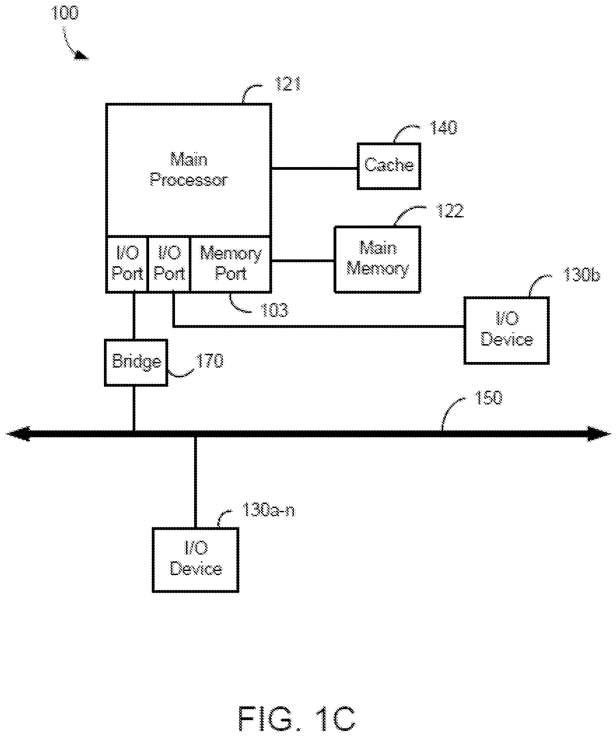

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more client devices (e.g., STAs) or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus (e.g., system bus 150). Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100 'via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Protocols for Reassociation Operations and Methods and Devices Using Such Protocols

Disclosed herein are systems and methods that can be used in any communication system including but not limited to Wi-Fi and LTE networks. The systems and methods can be used with an AP or STA in a communication network such as the devices discussed with reference to FIGS. 1A-C. Although embodiments of reassociation request and/or reassociation response operations for communications under the IEEE 802.11 standard are described herein, the systems and methods can be used with other networks (e.g., cellular and satellite networks) and in point to point communications.

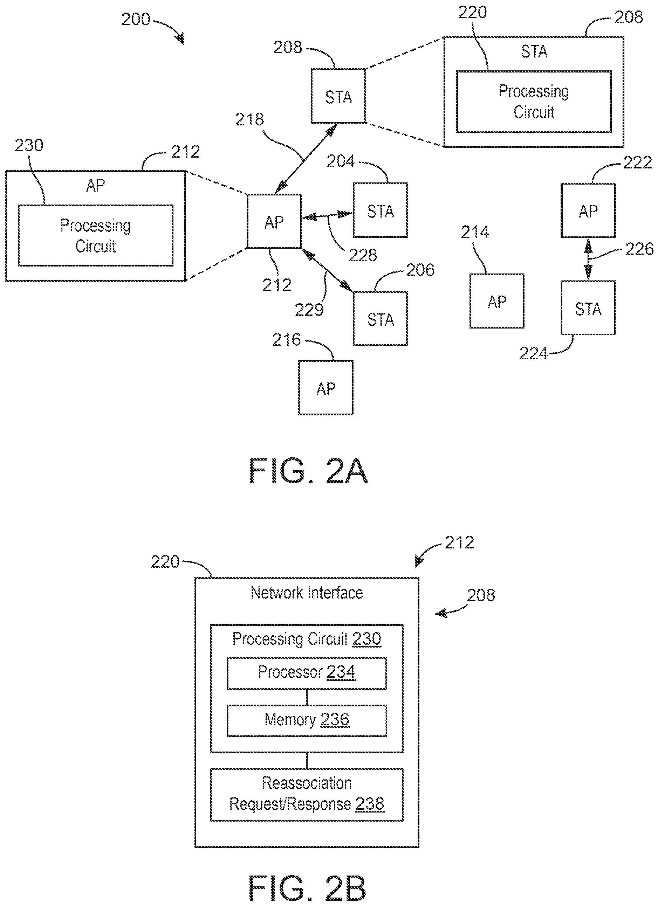

With reference to FIG. 2A, a wireless communication network or system 200 includes client devices or STAs 204, 206, 208, and 224 and APs 212, 214, 216, and 222. STAs 204, 206, 208, and 224 and APs 212, 214, 216, and 222 can be used in the systems discussed with reference to FIGS. 1A-C. Any number of STAs 204, 206, 208, and 224 and APs 212, 214, 216, and 222 can be used in the network or system 200. A STA or client device may refer to any device for communicating in communication system and includes but is not limited to a fixed, portable, or mobile laptop, desktop personal computer, personal digital assistant, workstation, wearable device, smart phone, or Wi-Fi phone in some embodiments. An access point or AP may refer to a device for communicatively coupling one or more non-AP devices (e.g., a client device or STA) to a network in some embodiments. An AP may enable non-AP devices to connect and communicate with a network in some embodiments. In some embodiments, an AP is a wireless access point (WAP) configured to enable wireless communication between non-AP devices. An AP includes but is not limited to a mobile, portable, or fixed hot spot, router, bridge, gNB node, eNodeB, evolved node B, or other communication device. An AP can provide services to a STA, such as, serving as a connection point to another network.

STAs 204, 206, 208, and 224 and APs 212, 214, 216, and 222 can each include a wireless transceiver and a various modules for communicating via connections. The modules can be software (e.g., firmware), hardware components, and combinations thereof. In some embodiments, each of STAs 204, 206, 208, and 224 and APs 212, 214, 216, and 222 includes an IEEE 802.11 conformant media access control (MAC) layer circuit and physical (PHY) layer interface to the wireless medium and can be part of a larger device or system. In some embodiments, each of STAs 204, 206, 208, and 224 and APs 212, 214, 216, and 222 operates according to other standards than the IEEE 802.11 standard.

A connection for wireless communication can be established between at least one of STAs 204, 206, 208, and 224 and APs 212, 214, 216, and 222 after authentication and association operations. For example, STA 208 has a connection 218 to AP 212. STAs 204, 206, 208, and 224 each include circuitry (e.g., a processor or processing circuit 221), and APs 212, 214, 216, and 226 each include circuitry (e.g., a processing circuit 233) for establishing and cancelling the connection 218 and communicating data across the connection. In another example, STA 204 has a connection 228 to AP 212, and STA 206 has a connection 229 to AP 222. STAs 204, 206, 208, and 224 each include circuitry (e.g., a processor or processing circuit 221), and APs 212, 214, 216, and 222 each include circuitry (e.g., a processing circuit 233) for operating according to data request and response operations as described below. The connections 218, 228, 229 and 226 are wireless connections formed using an association and/or authorization operation and cancelled using a disassociation and/or deauthentication operation in some embodiments. The connections 218, 228, 229 and 226 can be single link, multilink or dual link connections associated with APs 212 and 222 and can be a secure connection (e.g., using encryption) in some embodiments. In some embodiments, the connections 218, 228, 229 and 226 provide data communications and control and management communications on one or more channels in a 5G, 6G, 60G, or 2G band.

In some embodiments, STAs 204, 206, 208, and 224 and APs 212, 214, 216, and 222 are configured to use a reassociation request/response protocol to facilitate communication between STAs 204, 206, 208, and 224 and APs 212, 214, 216, and 222. The reassociation request/response protocol can be used to facilitate a protected reassociation with reduced on boarding time in some embodiments.

Referring to FIG. 2B, a device 220 is an AP 212 or STA 208 (FIG. 2A) and is configured for a secure probe/response protocol according to some embodiments. In some embodiments, device 220 includes a processing circuit 233, and a reassociation module 238 (e.g., a reassociation request/response module). A reassociation request/response module may refer to a module that processes or provides a reassociation request message, a reassociation response message in response to a reassociation request message, or a reassociation request message and response message in some embodiments. The processing circuit 233 is any circuitry or components that can perform logic and communication processing operations and can include a processor 234 and a memory 236 in some embodiments.

In some embodiments, the processing circuit 230 is implemented as a field-programmable gate array, an application-specific integrated circuit, hardware, a software executing processor, or state machines. In some embodiments, the processing circuit 230 is part of layers (e.g., MAC, network, PHY layers) of IEEE 802.11 standard devices. The processing circuit 230 can be configured to perform communication operations, frame building and processing, probe request and response operations, discovery operations, association operations, authorization operations, connection setup, disassociation operations, handoff operations, reassociation operations, and deauthentication operations in some embodiments. Instructions for the processing circuit 230 are stored in a non-transitory medium such as memory 236 in some embodiments. Processing circuit 221 of STA 208 and processing circuit 233 of AP 212 are similar to processing circuit 230 in some embodiments.

The memory 236 may be one or more devices (e.g., RAM, ROM, Flash memory, hard disk storage) for storing data and/or computer code for completing and/or facilitating the various processes described herein. The memory 236 may be or include non-transient volatile memory, non-volatile memory, and non-transitory computer storage media. Memory 236 may include database components, object code components, script components, or any other type of information structure for supporting the various activities and information structures described herein. Memory 236 may be communicably coupled to the processor 234 and include computer code or instructions for executing one or more processes described herein. The processor 234 may be implemented as one or more application specific integrated circuits (ASICs), field programmable gate arrays (FPGAs), a group of processing components, a software executing processor, state machines or other suitable electronic processing components. As such, AP, STA, or network device 106 (FIG. 1A) is configured to execute a variety of modules and/or programs and store associated data in a database of the memory 236. The modules (e.g., module 238) can be implemented in AP software (e.g., MAC layer or PHY layer software) or STA software (e.g., MAC layer or PHY layer software). In some embodiments, the AP 212 or STA 208 (FIG. 2A) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

In some embodiments, the reassociation module 238 is configured to provide a reassociation request message. For example, the reassociation module 238 is configured to cause device 220 provide a reassociation response message and/or reassociation request message for a secure reassociation operation. In some embodiments, the reassociation module 238 is configured to cause device 220 provide a reassociation request/response messages (e.g., frames) for a secure exchange between AP 212 and STA 208 (FIG. 2A) using a PMF. In some embodiments, reassociation module 238 is configured to implement a secure reassociation request/exchange (SPX) using existing keys for the connection (e.g., the previous connection).

Reassociation module 238 of an SRX device uses the PMF method (e.g., under 802.11) for protecting the respective association/reassociation request and association/reassociation response frames as long as both sides have the valid keys. When the AP 212 has a valid key and is able to successfully retrieve the secured or protected reassociation request frame from STA 208, the AP 212 can respond with a secured or protected reassociation response frame using its existing keys. In some embodiments, the reassociation operation is not necessarily to be considered as a fresh connection request but can be treated as an amendment request on the existing connection (e.g., connection 212 for AP 212 and STA 208). The subsequent onboarding process of communicating for an association operation and starting a 4-way handshake can be avoided in some embodiments. During the reassociation operation, AP 212 can advantageously process the reassociation request frame from STA 208 and adopt the updated client capabilities or parameters by honoring those parameters in some embodiments.

In some embodiments, reassociation module 238 may not respond to an SRX request message of STA 208 if AP 212 has removed the STA 208 from its associated list due to prolonged inactivity or due to security reasons. In such a case, STA 208 falls back to legacy connection procedures (e.g., discovery, association, authentication, and four way handshake operations).

When STA 208 sends a secured reassociation request message and AP responds with an unsecured reassociation response, reassociation module 238 of STA 208 rejects the unsecured reassociation response and follows a legacy connection procedure in some embodiments. If STA 208 sends an unsecured reassociation request message (e.g., as part of a fresh roaming attempt to the target AP) and the AP does not have the STA 208 in its associated list, the target AP would follow the legacy operation of sending unsecured reassociation response followed by starting the 4-way handshake using an authentication operation. When STA 208 sends an unsecured reassociation request message (as STA 208 cleans up earlier connection details with the AP including the keys) and the AP has the STA 208 on its associated list, the AP may follow the existing 802.11w specification recommended SA-query procedure for reassociation.

In some embodiments, the reassociation module 238 of an SRX aware AP 212 may schedule unicast key rotation or refresh after onboarding the STA as an additional security measure. In certain scenarios, when the device 220 (e.g., STA 208) roams from the connected AP (e.g., AP 212), device 220 does not communicate any messages with the existing AP and finds a new target AP. Device 220 attempts a connection with the new target AP by assuming that the device 220 may get better performance by moving to the new target AP (e.g., because device 220 has moved closer to the new target AP). However, this assumption may not be correct, the device 220 may temporarily move out of the connected AP's range and come back, or the roaming attempt with the connected AP may have failed (e.g., during the 4-way handshake) and the device may not have any choice other than coming back to the existing AP. During such scenarios, if the device 220 makes an unsecured reassociation request, the existing AP may treat device 220 as an intruder and start the SA-query procedure. After the SA-query timeout, the AP terminates the existing connection of 220 and starts onboarding this client as a fresh connection followed by the 4-way handshake.

In some embodiments, device 220 operates according to an SRX protocol in the above scenarios and device 220 retains the keys and provides a secured reassociation request message. If the AP also has the device in its associated list, the AP sends a secured reassociation response and device 220 is connected in the same network, thereby making roaming much faster.

In some embodiments, the reassociation module 238 of an SRX aware STA 208 that intends to change its association time configuration parameters for its own various reasons like upgrading/downgrading the transmit(Tx)/receive(Rx) chains for a power save purpose or concurrency purpose, etc. or to alter the supported rates temporarily for power save purpose, the reassociation module 238 can configure all such parameters dynamically (e.g., the number of supported Tx chains & Rx chains, upgrade/downgrade and the supported rates - EHT, VHT, HE, etc.). The reassociation module 238 can configure all non-security related changes parameters dynamically in some embodiments. In some embodiments, device 220 operates according to an SRX protocol to update the number of operating links for a multilink (ML) operation with an AP. Any unprotected (re)association frame will generally result in SA query operation. However, device 220 can use an SRX protocol (e.g., with 802.11be Multilink operation mode) according to the following scenarios:
1) AP 212 adds new links and STA 208 wants to use newly added links for its ML operations (MLO).
2) STA 208 has associated initially only on subset of supported links of AP and wants to increase the number of operating links(e.g., from a 2 link MLO association to a 3 link MLO association).
3) STA 208 has associated initially full or subset of supported links of the AP 212 and wants to reduce the number of current operating links (e.g., from a 3 link MLO association to a 2 link MLO association.
4) Traffic identifier to link (TID2LINK) mapping can be changed by the STA 208 as per its need.
The protected reassociation request can be used to communicate the new communication parameters and reassociate the device 220 to the AP.

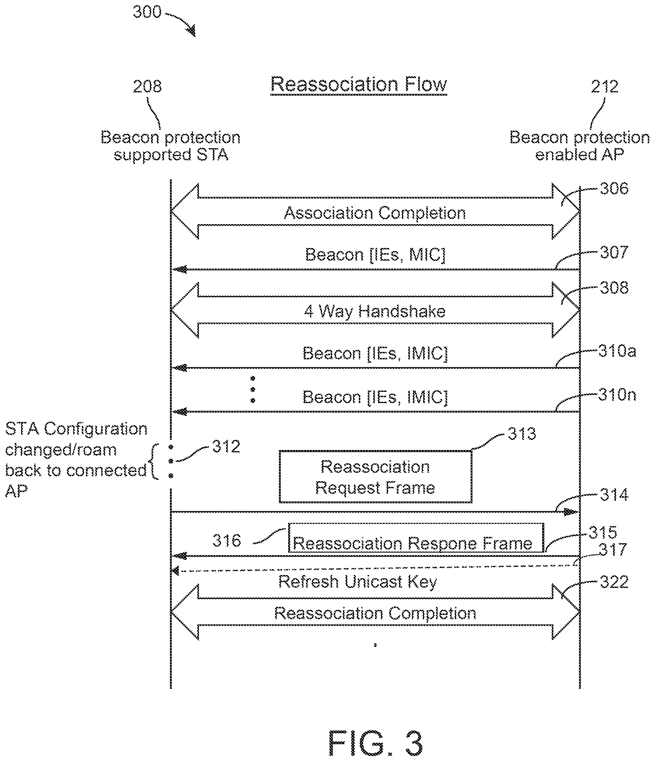

With reference to FIG. 3, the reassociation module 238 (FIG. 2B) handles a reassociation operation between AP 212 and STA 208. STA 208 and AP 212 support beacon protection in some embodiments. STA 208 and AP 212 perform flow 300 to handle the broadcast probe request frame using a secure probe request/response protocol. STA 208 provides a broadcast probe request frame when active scan is issued at an operation 302. AP 212 with beacon protection enabled responds to the broadcast probe request frame by providing an unprotected (without management frame protection (MFP)) unicast probe response frame in an operation 304. In some embodiments, the unprotected probe response frame for the broadcast probe request frame is sent irrespective of whether the STA 208 is associated or unassociated with the AP 212. At an operation 306 association is completed. At an operation 307, AP 212 provides a beacon frame in an operation 307. The beacon frame includes an information element (IE) for a management message integrity code (MIC) or management MIC element (MME). A four way handshake is completed at an operation 308 and the connection between STA 208 and AP 212 is completed. Beacon frames can be provided using the MME after the connection is established in operations 310a-n.

An event occurs at an operation 312. The event can be a failed roaming attempt (e.g., a return to the previous connected AP), a capability/parameter reconfiguration (e.g., a STA configuration change), or a multilink configuration change in some embodiments. AP 212 still holds the information with the old key value of STA 208 in some embodiments. Operation 312 can also be a failed roaming attempt, a capability/parameter reconfiguration, or a multilink configuration change in some embodiments.

A protected reassociation request message (e.g., frame 313) is directed from STA 208 specifically to reassociate to a previously associated AP (e.g., AP 212) after operation 312. The protected reassociation request message (e.g., frame 313) is provided from STA 208 to AP 212 in an operation 314 in some embodiments. AP 212 validates the secured reassociation request message and provides optionally a protected reassociation response message or frame 316 in an operation 315 in response to the protected reassociation request frame 313 sent in operation 314. The frames 313 and 316 in operations 314 and 315 can include information for completing reassociation. Reassociation is complete in an operation 322.

Using flow 300, the AP and STA reassociation happens more quickly without requiring teardown (e.g., higher levels remain intact) and a new four way handshake. An optional refresh unicast key can be sent from AP 212 to STA 208 in an operation 317 in some embodiments. For example, using flow 300, the STA 208 retains the key information and makes a secured reassociation request and as long as the AP 212 also has the client already in its associated list. The AP 212 sends a secured reassociation response, then the STA 208 can operate in the same network, thereby achieving faster the roaming.

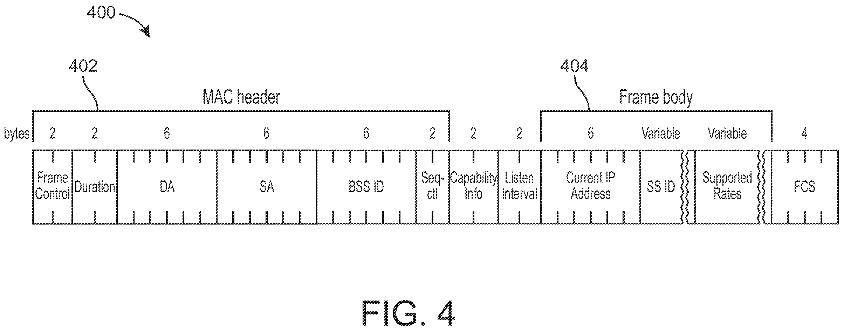

With reference to Fig. 4, the reassociation request frame 400 can include a MAC header 402, and a frame body 404 and can be configured as a protected frame (e.g., a protected management frame with subtype 2). Frame 400 is sent by the STA (e. g., STA 208). Frame body 404 can include fields for parameters such as parameters for capabilities or configurations that may be changed during reassociation. For example, frame body 404 can include information elements in fields for device capabilities (e.g., supported rates, number of supported Rx and TX chains, and multilink parameters). The reassociation response frame can be similar to frame 400 and is sent by the AP (AP 212). The reassociation response frame can be an acknowledgement of the reassociation request frame and is configured as a secured frame in some embodiments. The reassociation response frame can be configured as a protected frame (e.g., a protected management frame with subtype 3) and can indicate whether the STA is allowed to rejoin in some embodiments. The STA can send an acknowledgement of the reassociation response frame to the AP in some embodiments.

It should be noted that certain passages of this disclosure can reference terms such as "first" and "second" in connection with subsets of frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beam formers and/or beam formees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. Circuitry may refer to any electronic circuits or circuits.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g., using the phrase "on a single circuit", "on the set of circuits comprising" or "on a single device").

While the foregoing written description of the methods and systems enables one of ordinary skill to make and use embodiments thereof, those of ordinary skill will understand and appreciate the existence of variations, combinations, and equivalents of the specific embodiment, method, and examples herein. For example, specific values for bandwidths, channels and sub bands discussed above are exemplary. The present methods and systems should therefore not be limited by the above described embodiments, methods, and examples, but by all embodiments and methods within the scope and spirit of the disclosure.

## Claims

1. A first device (220), comprising:
a circuit configured to provide at least one frame (313) to a second device (208, 212), the frame (313) comprises a protected reassociation request message.

2. The first device (220) of claim 1, wherein the frame (313) is provided according to an 802.11 protocol and a connection is reestablished by using a reassociation operation.

3. The first device (220) of claim 1 or 2, wherein the first device (220) is a beacon protection enabled station (STA).

4. The first device (220) of any of claims 1 to 3, wherein the circuit is configured to receive a protected reassociation response message from the second device (208, 212).

5. The first device (220) of any of claims 1 to 4, wherein the second device (208, 212) is a beacon protection supported access point.

6. The first device (220) of any of claims 1 to 5, wherein the circuit is configured to receive a protected reassociation response message from the second device (208, 212) and to provide an acknowledgement message in response to the protected reassociation response message.

7. The first device (220) of claim 6, wherein the circuit is configured to provide the protected reassociation response message with information for links for a multilink operation.

8. The first device (220) of claim 7, wherein the information is for a reduced number of the links.

9. The first device (220) of claim 7 or 8, wherein the information is related to traffic identification to link mapping.

10. A first device (220), comprising:
a circuit configured to provide at least one frame (313) to a second device (208, 212) in response to a protected reassociation request message, the frame (313) comprises a protected reassociation response message.

11. The first device (220) of claim 10, wherein the frame (313) is provided according to an 802.11 protocol and a connection is established by using an association or authentication operation and wherein the first device (220) is a beacon protection enabled access point.

12. The first device (220) of claim 10 or 11, wherein the frame (313) comprises information that indicates confirmation of reassociation of a connection between the first device (220) and the second device (208, 212).

13. The first device (220) of any of claims 10 to 12, comprising at least one of the following features:
wherein the circuit is configured to provide the frame (313) if the second device (208, 212) is on a list of associated devices stored on the second device (208, 212);
wherein the circuit is configured to not provide the frame (313) if the second device (208, 212) is not on a list of associated devices stored on the second device (208, 212).

14. A method of operating a first device (220), the first device (220) having a connection with a second device (208, 212), the connection having associated key information, the method comprising:
providing a protected reassociation request message using the key information across the connection from the first device (220) to the second device (208, 212) after an event that affects the connection; and
receiving a protected reassociation response message from the second device (208, 212) at the first device (220) using the key information.

15. The method of claim 14, comprising at least one of the following features:
wherein the protected reassociation request message is a protected management frame (313);
wherein the event comprises a failed roaming attempt, a capability/parameter reconfiguration, or a multilink configuration change;
wherein the protected reassociation response message from the second device (208, 212) is provided if the first device (220) on a list of associated devices stored on the second device (208, 212);
wherein the event is a change in a multilink configuration;
wherein the event comprises roaming from the second device (208, 212).
